# EUROPEAN PATENT APPLICATION

(11) **EP 0 628 247 A2**
(43) Date of publication of application: **14.12.1994**
(21) Application number: 94108645.6
(22) Date of filing: 06.06.1994
(51) Int. Cl.: A01K 5/02, B01F 13/10

(54) **Mixing and dosage device for farm feed**

(30) Priority: 07.06.1993 IT MN930012
(71) Applicant: CRESTANI F., PRETO MARTINI F., PRETO MARTINI C., TONIOLO F., FERRARI L. trading as CRES.CO S.n.c. di CRESTANI, PRETO E C., I-37047 San Bonifacio (Verona) (IT)
(72) Inventor: Crestani, Flavio, I-36053 Gambellara (Vicenza) (IT)
(74) Representative: Modiano, Guido, Dr.-Ing.

(57) **Abstract**

The mixing and dosage device for farm feed has a plurality of hoppers (1,8,12) for containing individual feed components. The hoppers (1,8,12) are individually provided with a dosage device (2,9,13) and with a conveyor (3,11,16) to a single mixer (4) from which the complete feed exits towards the lines for distribution to feed troughs. The device also has an automatic system (19) which manages at least one of the dosage devices (2,9,13) to obtain a time-programmed dosage of the feed.

## Description

The invention relates to a mixing and dosage device for farm feed.

It is known that one of the most important factors to be considered in animal rearing is feeding, which must meet the nutritional requirements of the animals, protecting the quality of the final product and avoiding waste; in particular, the administering of nutrients must follow the changes in the needs of the animals that occur during their stay in the farm.

Considering the farming of chickens for fattening as an exemplary case, where the production cycle lasts approximately sixty days, this cycle is currently usually divided into three periods that have an equal number of different feeds; this produces a compromise between the need to avoid providing the farm with an excessively large number of different feeds and the wish to respond to the changes in the nutritional requirements of the animals, which obviously do not change every twenty days but day by day.

The same is true, with the exception of all the differences related to the length of the production cycle, for other poultry such as turkeys and guinea fowl.

This method is unsatisfactory: it is in fact demanding from the point of view of costs to acquire the different types of feed, all made by feed-making companies according to particular formulas; furthermore, use of said feeds is not optimized as the curve of the change in the nutritional demands of the animals is not followed closely.

An aim of the present invention is to provide a mixing and dosage device for farm feed that allows to closely follow the changes in the nutritional requirements of farm animals and allows great saving in management costs.

The proposed aim is achieved by a mixing and dosage device for farm feed, according to the invention, characterized in that it comprises a plurality of hoppers for containing the individual components, said hoppers being individually provided with a dosage device and with a conveyor to a single mixer from which the complete feed exits towards the lines for distribution to the troughs, an automatic system being furthermore provided which manages at least one of said dosage devices to obtain a time-programmed dosage of the feed.

Advantageously, the automatic system present in said device controls the startup of the dosage devices of the hoppers of the individual components in order to supply said components to the mixer every time the lines for distribution to the troughs demand feed.

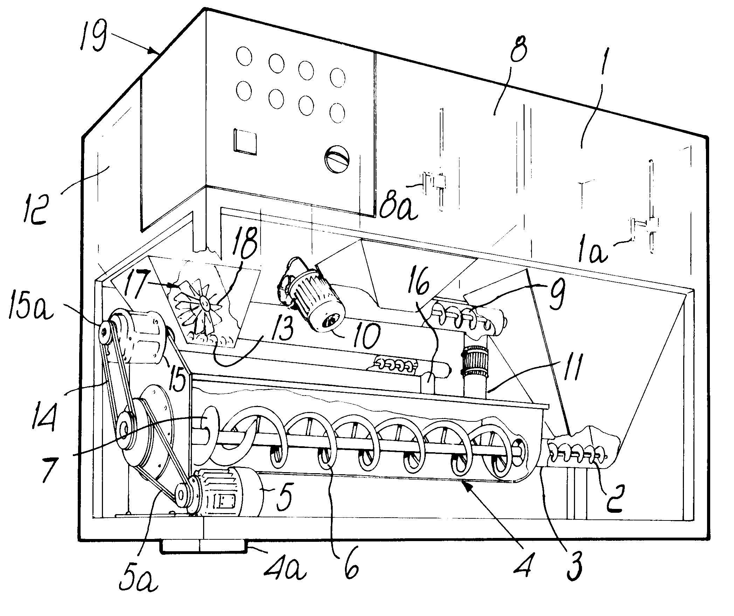

Further characteristics and advantages will become apparent from the description of a preferred but not exclusive embodiment of the invention, illustrated only by way Of non-limitative example in the accompanying drawings, wherein the only figure is a perspective view of the device with some parts shown in phantom lines.

With reference to the above figure, which relates to a device that is particularly suitable for a farm for poultry for fattening chickens, guinea fowl, and turkeys, the reference numeral 1 designates the hopper for containing the main complementary feed, which has the screw-feeder dosage device 2 and the conveyor 3 to the mixer 4 which has an outlet 4a for discharging the complete feed towards the lines for distribution to the troughs.

The shaft of the helical screw feeder 2, which is driven by the electric motor 5 by virtue of a belt transmission 5a, extends inside the mixer 4, where it supports the agitator element, which comprises the spiral 6, coiled around the shaft in the same direction as the screw feeder 2, and the short end portion of the spiral 7 which is coiled in the opposite direction, so as to create a sort of countercurrent that effectively helps to mix the feed.

The reference numeral 8 furthermore designates the hopper for containing a simple feed, such as wheat in grains, which is provided with the dosage device 9 actuated by the electric motor 10 and with the conveyor 11 to the mixer 4.

Both the hopper 1 and the hopper 8 have a level control device, respectively designated by the reference numerals 1a and 8a, that provides for the correct supply of said hoppers from storage silos not shown in the figure.

The reference numeral 12 designates the hopper for containing special products, such as growth stimulants or anti-stress additives, that feeds the micro-dosage device 13, which produces an extremely low flow-rate, drawing its motion with a constant ratio from the shaft of the screw feeder 2 by means of the belt 14 and the reduction unit 15; the reference numeral 16 furthermore designates the conveyor to the mixer 4.

It should be noted that transmission of the motion between the shaft of the screw feeder 2 and the reduction unit 15 is configured so as to produce a single transmission ratio; however, it is possible to replace, for example, the pulley 15a with a pulley provided with three races of different diameters to allow work with different ratios.

The agitator, generally designated by the reference numeral 17, acts inside the hopper 12 and comprises multiple U-shaped parts 18 that extend from a freely rotating central hub and are shaped complementarily with respect to the turns of the screw feeder 13 of the micro-dosage device; in this manner, when the screw feeder 13 is moved, the agitator is also rotated and the constant flow of the product falling onto said screw feeder 13 is ensured.

Finally, the reference numeral 19 designates a microprocessor that automatically manages, according to a user-selected program, the operation of the various elements of the device to ensure optimum dosage of the feed throughout the poultry production cycle: specifically, the dosage device 2 for the main complementary feed operates with a constant flow-rate throughout the cycle, whereas the flow-rate of the dosage device 9 for the simple feed, which is mixed with said main feed, changes automatically day by day to meet the changes in the nutritional requirements of the poultry with maximum punctuality.

The microprocessor 19 is programmed when the chicks arrive, and throughout the growth cycle a complete feed is released from the outlet 4a of the mixer 4 every time that a demand for feed occurs at the distribution lines (not shown in the figure). The feed is thus dosed so as to meet the nutritional program of the animals on a day-by-day basis.

It should also be noted that the microprocessor 19 controls the activation of the dosage devices of the various hoppers every time feed is demanded, in order to provide the individual components to the mixer 4 only when needed, thus avoiding any possibility of waste of material.

In addition to the immediate response to the changes in the nutritional requirements of the animals allowed by the device according to the invention, with a corresponding optimization of feed consumption and of the quality of the product that is obtained, the fact must be stressed that a great saving in running costs is provided by the adoption of a simple feed, such as wheat or maize in grains, to form one of the components of the complete feed which is sent to the troughs.

It is evident that the above described operating mode, with a constant flow-rate of the dosage device for the main complementary feed and a flow-rate of the dosage device for the simple feed that can vary according to a certain criterion, can be changed at will, according to the nutritional requirements to be met, simply by varying the program entered in the microprocessor.

It is furthermore possible to vary the method for motorizing the individual dosage devices, and thus for example the micro-dosage device may also be driven independently by means of a motor controlled by the microprocessor if one wishes to allow variations in the ratio between the flow-rate delivered by said micro-dosage device and the flow-rate of the dosage device for the main complementary feed.

The mixing and dosage device according to the invention is in any case susceptible to the most extensive variations even in the number of hoppers, with associated dosage device, which may be present, and in the operating mode of said dosage devices, which can be motorized and controlled by the microprocessor in various manners, so as to allow adaptation for installation in farms for different animal types.

The device according to the invention is susceptible to numerous other modifications and variations within the scope of the inventive concept; all the details may furthermore be replaced with other technically equivalent elements.

In the practical embodiment of the invention, the materials employed, as well as the shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Mixing and dosage device for farm feed, characterized in that it comprises a plurality of hoppers for containing individual components, said hoppers being individually provided with a dosage device and with a conveyor to a single mixer from which the complete feed exits towards the lines for distribution to the troughs, an automatic system being furthermore provided which manages at least one of said dosage devices to obtain a time-programmed dosage of the feed.

2. Mixing and dosage device for farm feed, characterized in that it comprises a plurality of hoppers for containing the individual components, said hoppers being individually provided with a dosage device and with a conveyor to a single mixer from which the complete feed exits towards the lines for distribution to the troughs, an automatic system being furthermore provided that manages at least one of said dosage devices to obtain a time-programmed dosage of the feed and controls the startup of the dosage devices of the hoppers of the individual components to supply said components to the mixer every time feed is demanded by said lines for distribution to the troughs.

3. Device according to one or more of the preceding claims, characterized in that at least one of the components is a simple feed in grains.

4. Device according to one or more of the preceding claims, characterized in that the mixer comprises a spiral-shaped agitator which is keyed on the same shaft as the screw feeder of one of the dosage devices, said spiral having the same direction as said screw feeder, a short spiral portion coiled around the shaft in the opposite direction being provided at the end of said agitator which is opposite to the one that faces said screw feeder.

5. Device according to one or more of the preceding claims, particularly for poultry for fattening, characterized in that it comprises: a hopper for containing the main complementary feed, provided with an independently motorized screw-feeder dosage device which has a constant flow-rate; a hopper for containing a simple feed, provided with an independently motorized screw-feeder dosage device which has a variable flow-rate; a micro-dosage device with a hopper for special products, which is connected to the constant flow-rate dosage device by means of a mechanical transmission; and a microprocessor for the automatic management of the dosage of the feed throughout the production cycle.

6. Device according to one or more of the preceding claims, characterized in that the agitator of the mixer is keyed on the shaft of the screw feeder of the dosage device for the main complementary feed.

7. Device according to one or more of the preceding claims, characterized in that the mechanical transmission of the motion between the constant flow-rate dosage device and the micro-dosage device has a single transmission ratio.

8. Device according to one or more of the preceding claims, characterized in that the mechanical transmission of the motion between the constant flow-rate dosage device and the micro-dosage device has multiple transmission ratios.

9. Device according to one or more of the preceding claims, characterized by the presence, inside the hopper of the micro-dosage device, of an agitator that comprises multiple U-shaped elements that extend radially from a freely rotating central hub and are shaped complementarily with respect to the screw feeder of the micro-dosage device.

10. Device according to one or more of the preceding claims, characterized by the presence of level control devices inside the hoppers which ensure the correct supply of said hoppers from storage silos.
